# EUROPEAN PATENT APPLICATION

(11) **EP 4 530 843 A1**
(43) Date of publication of application: **02.04.2025**
(21) Application number: 23878826.9
(22) Date of filing: 30.08.2023
(51) Int. Cl.: G06F 9/50, G06F 13/38, G06F 13/40, G06F 13/42

(54) **OUT-OF-BAND QUERY/CONFIGURATION METHOD FOR INFORMATION OF PROCESSOR IN SERVER, AND SERVER**

(30) Priority: 21.10.2022 CN 202211296847
(71) Applicant: xFusion Digital Technologies Co., Ltd., Zhengzhou, Henan 450000 (CN)
(72) Inventor: WANG, Chao, Zhengzhou, Henan 450000 (CN); WAN, Kanran, Zhengzhou, Henan 450000 (CN); LIN, Zhen, Zhengzhou, Henan 450000 (CN)
(74) Representative: MERH-IP Matias Erny Reichl Hoffmann Patentanwälte PartG mbB
(86) International application number: PCT/CN2023/115751
(87) International publication number: WO 2024/082831

(57) **Abstract**

An out-of-band query/configuration method for central processing unit CPU information in a server is provided. The method is applied to a baseboard management controller BMC in the server. A plurality of CPUs are configured in the server, and each CPU is connected to the BMC by a plurality of buses. The method includes: the BMC receives an out-of-band management command, where the out-of-band management command is configured to query/configure information in the plurality of CPUs; in response to the out-of-band management command, the BMC accesses a first CPU in the plurality of CPUs by a first bus in the plurality of buses, and the BMC synchronously accesses a second CPU in the plurality of CPUs by a second bus in the plurality of buses; and the BMC obtains information in the first CPU and the second CPU, or configures information in the first CPU and the second CPU. In this way, the BMC accesses the plurality of CPUs in parallel by the plurality of buses, and queries/configures the information in each of the CPUs, thereby improving efficiency of querying/configuring the information in the plurality of CPUs by the BMC.

## Description

This application claims priority to Chinese Patent Application No. 202211296847.X, filed with the China National Intellectual Property Administration on October 21, 2022 and entitled "OUT-OF-BAND QUERY/CONFIGURATION METHOD FOR CENTRAL PROCESSING UNIT INFORMATION IN SERVER AND SERVER", which is incorporated herein by reference in its entirety.

### TECHNICAL FIELD

This application relates to the field of computer technologies, and in particular, to an out-of-band query/configuration method for central processing unit CPU information in a server and a server.

### BACKGROUND

An out-of-band management service module (out of band system management service module, OOBMSM) is usually configured in a central processing unit (central processing unit, CPU) in a server. The OOBMSM may provide an out-of-band interface for the CPU. A baseboard management controller (baseboard management controller, BMC) in the server may query/configure information in the CPU through the out-of-band interface. However, when there are a plurality of CPUs in the server, it is usually necessary to take a long time for the BMC to query/configure information in the CPUs.

### SUMMARY

This application provides an out-of-band query/configuration method for central processing unit CPU information in a server, a server, and a computer storage medium, to improve efficiency of querying/configuring information in a CPU in a server by a BMC.

According to a first aspect, this application provides an out-of-band query/configuration method for central processing unit CPU information in a server. The method is applied to a baseboard management controller BMC in the server, where a plurality of CPUs are configured in the server, and each CPU is connected to the BMC by a plurality of buses. The method includes: the BMC receives an out-of-band management command, where the out-of-band management command is configured to query/configure information in the plurality of CPUs; in response to the out-of-band management command, the BMC accesses a first CPU in the plurality of CPUs by a first bus in the plurality of buses, and the BMC synchronously accesses a second CPU in the plurality of CPUs by a second bus in the plurality of buses; and the BMC obtains information in the first CPU and the second CPU, or configures information in the first CPU and the second CPU.

In the embodiments of this application, when out-of-band query/configuration is performed on the information in the CPUs, the BMC accesses the plurality of CPUs in parallel by the plurality of buses, and queries/configures the information in each of the CPUs. Therefore, efficiency of querying/configuring the information in the plurality of CPUs by the BMC is improved. In addition, the BMC may access the CPUs by the plurality of buses. Therefore, when one of the buses fails, the BMC may also access the CPUs by another bus, thereby improving system reliability.

In a possible implementation, the out-of-band management command is a query instruction configured to query the information in the plurality of CPUs or a configuration instruction configured to configure the information in the plurality of CPUs.

In a possible implementation, the out-of-band management command is a log collection instruction configured to collect crash logs (CrashLog) in the plurality of CPUs. In this case, that the BMC obtains information in the first CPU and the second CPU specifically includes: the BMC obtains a crash log in the first CPU by the first bus, and simultaneously obtains a crash log in the second CPU by the second bus.

In a possible implementation, the out-of-band management command is the log collection instruction when the server breaks down.

In a possible implementation, the plurality of buses include three or any two of a platform environment control interface PECI bus, an improved inter-integrated circuit I3C bus, or a peripheral component interconnect express PCIE bus.

In a possible implementation, that the BMC accesses a first CPU in the plurality of CPUs by a first bus in the plurality of buses includes: the BMC sends an I/O request by the first bus in the plurality of buses; and if a response message in response to the I/O request is received within a preset time, the BMC accesses the first CPU in the plurality of CPUs by the first bus.

In a possible implementation, that the BMC accesses a first CPU in the plurality of CPUs by a first bus in the plurality of buses includes: the BMC determines that a bus interface connected to the first bus in the plurality of buses is not occupied, and the BMC accesses the first CPU in the plurality of CPUs by the first bus.

In a possible implementation, the method further includes: on a condition that the first bus fails or the bus interface connected to the first bus is occupied, the BMC accesses any CPU in the plurality of CPUs by a bus other than the first bus in the plurality of buses. In this way, the plurality of buses back up each other, thereby effectively improving reliability of out-of-band query/configuration for information in the CPUs.

According to a second aspect, this application provides an out-of-band query/configuration apparatus for central processing unit CPU information in a server. The apparatus is deployed in a baseboard management controller BMC in the server, a plurality of CPUs are configured in the server, and each CPU is connected to the BMC by a plurality of buses. The apparatus includes: a receiving module, configured to receive an out-of-band management command, where the out-of-band management command is configured to query/configure information in the plurality of CPUs; an access module, configured to: in response to the out-of-band management command, access a first CPU in the plurality of CPUs by a first bus in the plurality of buses, and synchronously access a second CPU in the plurality of CPUs by a second bus in the plurality of buses; and a query/configuration module, configured to obtain information in the first CPU and the second CPU, or configure information in the first CPU and the second CPU.

In a possible implementation, the out-of-band management command is a query instruction configured to query the information in the plurality of CPUs or a configuration instruction configured to configure the information in the plurality of CPUs.

In a possible implementation, the out-of-band management command is a log collection instruction configured to collect crash logs (CrashLog) in the plurality of CPUs. In this case, when obtaining the information in the first CPU and the second CPU, the query/configuration module is specifically configured to obtain, by the BMC, a crash log in the first CPU by the first bus, and simultaneously obtain a crash log in the second CPU by the second bus.

In a possible implementation, the out-of-band management command is the log collection instruction when the server breaks down.

In a possible implementation, the plurality of buses include three or any two of a platform environment control interface PECI bus, an improved inter-integrated circuit I3C bus, or a peripheral component interconnect express PCIE bus.

In a possible implementation, when accessing the first CPU in the plurality of CPUs by the first bus in the plurality of buses, the access module is specifically configured to: send an I/O request by the first bus in the plurality of buses; and if a response message in response to the I/O request is received within a preset time, access the first CPU in the plurality of CPUs by the first bus.

In a possible implementation, when accessing the first CPU in the plurality of CPUs by the first bus in the plurality of buses, the access module is specifically configured to: determine, by the BMC, that a bus interface connected to the first bus is not occupied, and access, by the BMC, the first CPU in the plurality of CPUs by the first bus in the plurality of buses.

In a possible implementation, the method further includes: on a condition that the first bus fails or the bus interface connected to the first bus is occupied, the access module accesses any CPU in the plurality of CPUs by a bus other than the first bus in the plurality of buses.

According to a third aspect, this application provides a server, including: a plurality of central processing units CPUs and a baseboard management controller BMC, where each of the CPUs is connected to the BMC by a plurality of buses, and the BMC is configured to perform the method described in the first aspect.

According to a fourth aspect, this application provides a computer-readable storage medium. The computer-readable storage medium stores a computer program, and when the computer program runs on a processor, the processor is enabled to perform the method described in the first aspect.

It may be understood that, for beneficial effects of the second aspect to the fourth aspect, refer to related descriptions in the first aspect. Details are not described herein again.

### BRIEF DESCRIPTION OF DRAWINGS

FIG. 1 is a schematic diagram of a connection between a BMC and CPUs in a server according to an embodiment of this application;
FIG. 2 is a schematic diagram of a connection between a BMC and CPUs in a server according to an embodiment of this application;
FIG. 3 is a schematic diagram of a connection between a BMC and CPUs in a server according to an embodiment of this application;
FIG. 4 is a schematic flowchart of an out-of-band query/configuration method for CPU information in a server according to an embodiment of this application;
FIG. 5 is a schematic diagram of a process of querying/configuring information in a CPU in a server by BMC according to an embodiment of this application;
FIG. 6 is a schematic diagram of collecting crash logs in n CPUs by a BMC according to an embodiment of this application; and
FIG. 7 is a schematic diagram of a structure of an out-of-band query/configuration apparatus for central processing unit CPU information in a server according to an embodiment of this application.

### DESCRIPTION OF EMBODIMENTS

In this article, the term "and/or" represents an association relationship between associated objects, and represents that there may be three relationships, for example, A and/or B may represent three cases: A exists alone, both A and B exist, and B exists alone. In this article, the symbol "/" represents that the associated objects have an "or" relationship, for example, A/B represents A or B.

The terms "first", "second", and the like in the specification and claims in this article are used to distinguish between different objects, and are not used to describe a specific sequence of objects. For example, "first response message", "second response message", and the like are used to distinguish between different response messages, and are not used to describe a specific sequence of the response messages.

In the embodiments of this application, words such as "exemplarily" or "for example" are used to represent examples, illustrations, or descriptions. Any embodiment or design solution described as "exemplarily" or "for example" in the embodiments of this application should not be construed as being more preferred or advantageous than other embodiments or design solutions. Exactly, use of the words such as "exemplarily" or "for example" is intended to present relevant concepts in a specific manner.

In the descriptions of the embodiments of this application, unless otherwise specified, "a plurality of" refers to two or more, for example, "a plurality of processing units" refers to two or more processing units, and "a plurality of elements" refers to two or more elements.

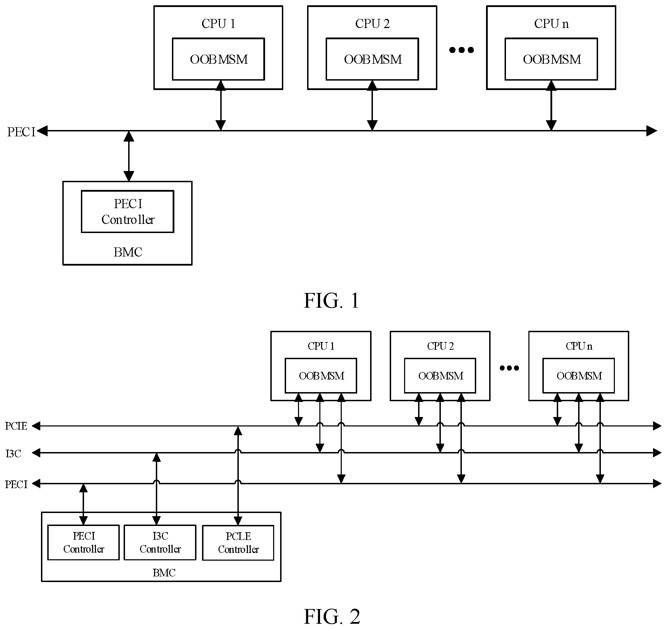

Exemplarily, FIG. 1 shows a schematic diagram of a connection between a BMC and CPUs in a server. As shown in FIG. 1, a BMC and a plurality of CPUs (that is, CPU 1 to CPU n) may be configured in a server. Each CPU is connected to the BMC by a platform environment control interface (platform environment control interface, PECI) bus. An OOBMSM configured to provide an out-of-band interface is configured in each CPU. The out-of-band interface may be a PECI bus interface, and a PECI controller (controller) is configured in the BMC. The PECI controller may provide a PECI bus interface. The PECI bus interface in the BMC may be connected to the PECI bus interfaces in the CPUs by the PECI bus.

The BMC is also referred to as an out-of-band controller, with an out-of-band management module running therein, to remotely maintain and manage the server through an independent management channel. The out-of-band management module is a management unit of a non-service module, is completely independent of an operating system of the server, and may communicate with a basic input/output system (basic input output system, BIOS) and an operating system (operating system, OS) (or an OS management unit) through out-of-band management interfaces (for example, including a PECI interface, a PCIE interface, and an I3C interface) of the server.

Exemplarily, the out-of-band management module may include a computer device running state management unit, a management system in a management chip outside a processor, a computer device mainboard management unit, a system management module (system management mode, SMM), and the like. It should be noted that a specific form of the out-of-band management module is not limited in this embodiment of this application, and the foregoing is merely an example for description. In the following embodiments, an example in which the out-of-band management module is BMC software is used for description. In the following embodiments, description of performing a specific step by the BMC may be understood as that the out-of-band controller invokes the out-of-band management module to perform the step.

In FIG. 1, the PECI bus supports only one-to-one access, that is, the BMC can access only one CPU at a time. Because the plurality of CPUs are configured in the server, compared with querying/configuring a single CPU, time consumed is multiplied when the BMC queries/configures information in these CPUs. In addition, when the PECI bus fails, the BMC cannot query/configure the information in the CUPs, resulting in low reliability.

In view of this, an embodiment of this application provides an out-of-band query/configuration method for CPU information in a server. In this method, a BMC may access a plurality of CPUs in parallel by a plurality of buses, and query/configure information in each of the CPUs. Therefore, efficiency of querying/configuring the information in the plurality of CPUs by the BMC is improved. In addition, the BMC may access the CPUs by the plurality of buses. Therefore, when one of the buses fails, the BMC may also access the CPUs by another bus, thereby improving system reliability.

Exemplarily, FIG. 2 shows a schematic diagram of another connection between a BMC and CPUs in a server. As shown in FIG. 2, a BMC and a plurality of CPUs (that is, CPU 0 to CPU n) may be configured in a server. Each CPU is connected to the BMC by a PECI bus, an improved inter-integrated circuit (improved inter-integrated circuit, I3C) bus, and a peripheral component interconnect express (peripheral component interconnect express, PCIE) bus. A PECI controller, an I3C controller, and a PCIE controller may be configured in the BMC. The PECI controller may provide a PECI bus interface, the I3C controller may provide an I3C bus interface, and the PCIE controller may provide a PCIE bus interface. A PECI bus interface, an I3C bus interface, and a PCIE bus interface may be configured in each of the CPUs.

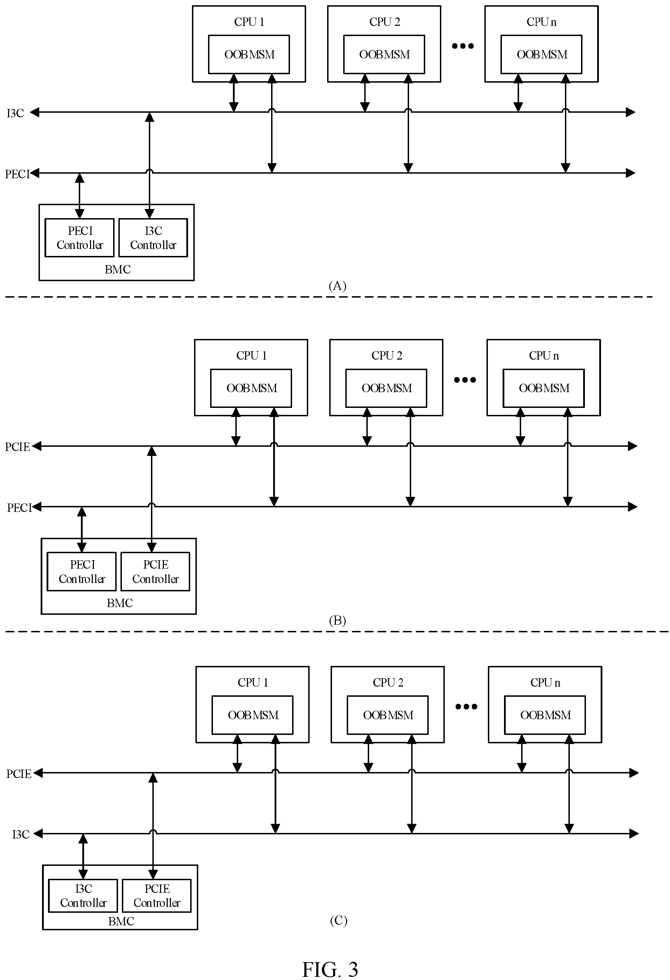

In some embodiments, the BMC and each of the CPUs may alternatively be connected by any two of the PECI bus, the I3C bus, and the PCIE bus. In this case, controllers related to the buses connected therebetween may be configured in the BMC. In the BMC and each of the CPUs, bus interfaces related to the buses connected to the two may be configured. For example, as shown in (A) in FIG. 3, the BMC and each of the CPUs may alternatively be connected by the PECI bus and the I3C bus. In (A) in FIG. 3, the PECI controller and the I3C controller may be configured in the BMC, and the PECI bus interface and the I3C bus interface may be configured in each of the CPUs. As shown in (B) in FIG. 3, the BMC and each of the CPUs may alternatively be connected by the PECI bus and the PCIE bus. In (B) in FIG. 3, the PECI controller and the PCIE controller may be configured in the BMC, and the PECI bus interface and the PCIE bus interface may be configured in each of the CPUs. As shown in (C) in FIG. 3, the BMC and each of the CPUs may alternatively be connected by the I3C bus and the PCIE bus. In (C) in FIG. 3, the I3C controller and the PCIE controller may be configured in the BMC, and the I3C bus interface and the PCIE bus interface may be configured in each of the CPUs.

The foregoing is a related description of the connection between the BMC and the CPUs in the server in this embodiment of this application. The following describes, based on the connection between the BMC and the CPUs in the server that is described in FIG. 2 and/or FIG. 3, an out-of-band query/configuration method for CPU information in a server according to an embodiment of this application.

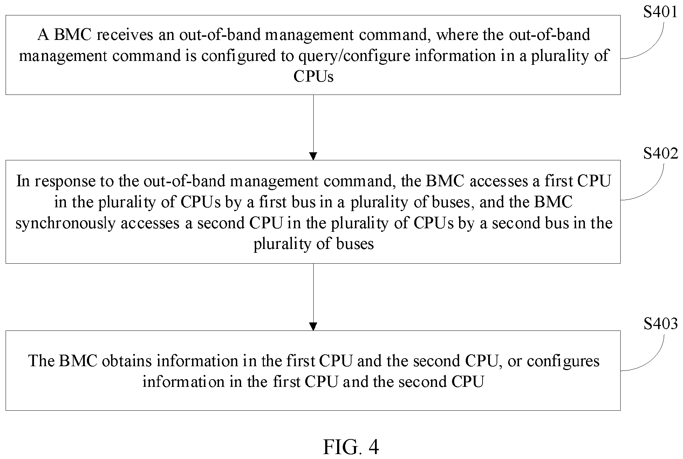

Exemplarily, FIG. 4 shows an out-of-band query/configuration method for CPU information in a server. A BMC and a plurality of CPUs are configured in the server, and each CPU is connected to the BMC by a plurality of buses. For ease of understanding, the following uses the BMC as an execution body for description. Certainly, a solution in which the execution body is a specific module, unit, or component in the BMC still falls within the protection scope of this application. As shown in FIG. 4, the method may include the following steps.

S401: the BMC receives an out-of-band management command, where the out-of-band management command is configured to query/configure information in the plurality of CPUs.

In this embodiment, the out-of-band management command may be configured to query/configure the information in the plurality of CPUs. In this case, the out-of-band management command may be a query instruction configured to query the information in the plurality of CPUs. The query instruction may be automatically triggered by a system, for example, triggered once at an interval of preset duration. Exemplarily, the query instruction may be configured to query a temperature of the CPU, a usage rate, a topology of a memory, and the like.

In addition, the out-of-band management command may be configured to configure the information in the plurality of CPUs. In this case, the out-of-band management command may be a configuration instruction configured to configure the information in the plurality of CPUs. The configuration instruction may be but is not limited to be triggered by a user. The user may deliver the configuration instruction by using a configuration interface provided by the BMC. Exemplarily, by using the configuration interface, the user may configure a power, a frequency, and the like of the CPU, may configure information that needs to be reported or does not need to be reported, and may configure a bit width and a rate of each bus, a frequency and a time sequence of a memory, a rotation speed and a mode of a fan (for example, a voltage mode or a pulse width modulation (pulse width modulation, PWM) mode), and the like.

In addition, the out-of-band management command may alternatively be a log collection instruction configured to collect crash logs (CrashLog) in the plurality of CPUs. In this case, the out-of-band management command may be triggered by one or more CPUs in the server when the server breaks down.

In some embodiments, the out-of-band management command may be a command specified in an Intel protocol, for example, may be a general bus command (generalbuscommands), a device-specific command (device specific commands), or the like. The general bus command may include: Ping-Electrical Interface and PECI over SMBUS and GetDIB-PECI Electrical and PECI over SMBUS. The device-specific command may include: GetTemp(), RDpkgConfig(), WrPkgConfig(), RdIAMSR(), RdIAMSREx(), WrIAMSR(), RdPCIConfig(), WrPCIConfig(), RdPCIConfigLocal(), WrPCIConfigLocal(), RDEndPointConfig(), WrEndPointConfig(), CrashDump(), Telemetry(), and the like.

Ping-Electrical Interface and PECI over SMBUS may be configured to test whether the CPU responds. GetDIB-PECI Electrical and PECI over SMBUS may be configured to return version information of the CPU.

GetTemp() may be configured to query the temperature in the CPU. RdPkgConfig() may be configured to provide a read permission on packaged configuration space in the CPU, including various power supply and heat management functions. WrPkgConfig() may be configured to provide write access to package configuration space in the CPU, including various power supply and heat management functions. RdIAMSR() may be configured to provide read access to a register defined in a machine check architecture (machine check architecture, MCA). RdIAMSREx() may be configured to provide read access to a register defined in a specific MCA. WrIAMSR() may be configured to provide write access to the register defined in the MCA architecture. RAPCIConfig() may be configured to provide read access to a register in a PCI device connected to the CPU. WrPCIConfig() may be configured to provide write access to the register in the PCI device connected to the CPU. RdPCIConfigLocal() may be configured to provide read access to a register in a PCI device integrated inside the CPU. WrPCIConfigLocal() may be configured to provide write access to the register in the PCI device integrated inside the CPU. RDEndPointConfig() may be configured to provide read access to memory-mapped I/O in peripheral component interconnection (peripheral component interconnection, PCI). WrEndPointConfig() may be configured to provide write access to the memory-mapped I/O in the PCI. CrashDump() may be configured to collect the crash log.

In some embodiments, the BMC may perform S402 after obtaining the out-of-band management command.

S402: in response to the out-of-band management command, the BMC accesses a first CPU in the plurality of CPUs by a first bus in the plurality of buses, and the BMC synchronously accesses a second CPU in the plurality of CPUs by a second bus in the plurality of buses.

In this embodiment, after obtaining the out-of-band management command, the BMC may access the first CPU in the plurality of CPUs by the first bus in the plurality of buses, and the BMC synchronously accesses the second CPU in the plurality of CPUs by the second bus in the plurality of buses. Certainly, the BMC may also access a third CPU, a fourth CPU, and the like in the plurality of CPUs by other buses. Exemplarily, the BMC may enable one thread for each of the CPUs to access each of the CPUs.

S403: the BMC obtains information in the first CPU and the second CPU, or configures information in the first CPU and the second CPU.

In this embodiment, the BMC may obtain the information in the first CPU or configure the information in the first CPU when successfully accessing the first CPU by the first bus. The BMC may obtain the information in the second CPU or configure the information in the second CPU when successfully accessing the second CPU by the second bus. Exemplarily, the BMC may enable one thread for each of the CPUs, to obtain information in each of the CPUs or configure information in each of the CPUs.

Exemplarily, the BMC may query a temperature of the CPU and a topology of a memory, or collect a crash log (CrashLog) in the CPU, or the like. The BMC may configure a power, a frequency, and the like of the CPU, may configure information that needs to be reported or does not need to be reported, and may configure a bit width and a rate of each bus, a frequency and a time sequence of a memory, a rotation speed and a mode of a fan (for example, a voltage mode or a pulse width modulation (pulse width modulation, PWM) mode), and the like.

In this way, when out-of-band query/configuration is performed on the information in the CPUs, the BMC accesses the plurality of CPUs in parallel by the plurality of buses, and queries/configures the information in the CPUs. Therefore, efficiency of querying/configuring the information in the plurality of CPUs by the BMC is improved. In addition, because the BMC may access the CPUs by the plurality of buses, the BMC may also access the CPUs by another bus when one of the buses fails, thereby improving system reliability.

For ease of understanding, the following uses an example in which the BMC queries/configures information in a CPU in the server for description.

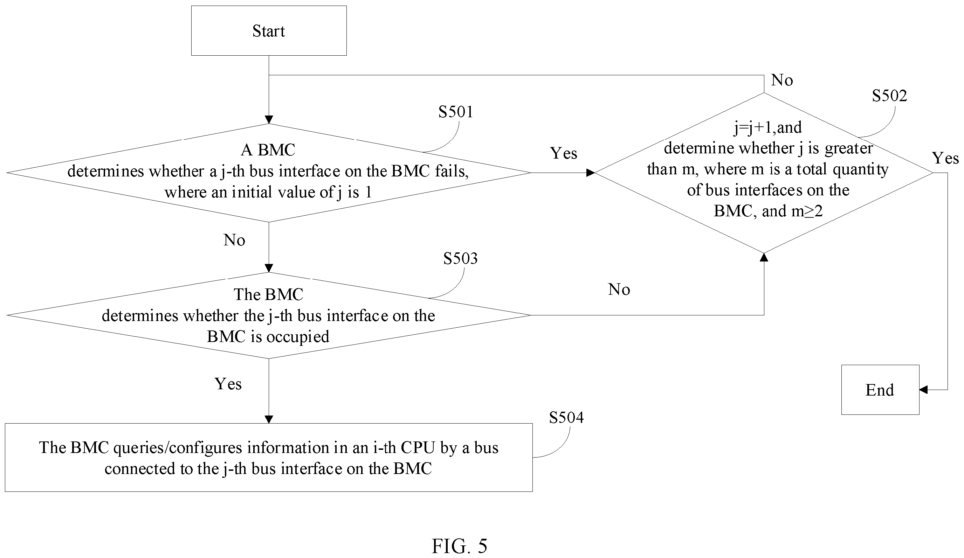

Exemplarily, FIG. 5 shows a process of querying/configuring information in a CPU in a server by BMC. For ease of understanding, the BMC is also used as an execution body for description. Certainly, a solution in which the execution body is a specific module, unit, or component in the BMC still falls within the protection scope of this application. As shown in FIG. 5, the process may include the following steps.

S501: the BMC determines whether a j-th bus interface on the BMC fails, where an initial value of j is 1.

In this embodiment, when querying/configuring information in an i-th (an initial value of i is 1) CPU in the server, the BMC may first determine whether the j-th bus interface on the BMC fails. When it is determined that a failure occurs, S502 may be performed. Otherwise, S503 is performed.

In some embodiments, the BMC may send a data packet to the i-th CPU through the j-th bus interface on the BMC. If the i-th CPU does not respond within a preset time, or the i-th CPU returns, to the BMC, a message configured to represent that the j-th bus interface fails, the BMC may determine that the j-th bus interface in the i-th CPU fails. If the i-th CPU responds within the preset time, and the i-th CPU returns, to the BMC, a message configured to represent that the j-th bus interface does not fail, the BMC may determine that the j-th bus interface on the BMC does not fail.

In some embodiments, after determining that the j-th bus interface on the BMC fails, the BMC may further record information indicating that the j-th bus interface fails. In this way, when performing failure determining on the j-th bus interface on the BMC again subsequently, the BMC may directly perform determining based on the information recorded by the BMC.

S502: j=j+1, and determine whether j is greater than m, where m is a total quantity of bus interfaces on the BMC, and m≥2.

In this instance, the BMC may perform determining on a (j+1)-th bus interface on the BMC when determining that the j-th bus interface on the BMC fails. In this case, the BMC may set j to (j+1). In addition, the BMC may determine whether j is greater than the total quantity m of bus interfaces configured on the BMC. When j>m, it indicates that determining of all the bus interfaces on the BMC is completed. In this case, the process may be ended, or determining is performed again when another bus interface is idle. When j≤m, it indicates that determining of all the bus interfaces on the BMC is not completed. In this case, the BMC may return to perform S501.

S503: the BMC determines whether the j-th bus interface on the BMC is occupied.

In this embodiment, when the BMC determines that the j-th bus interface on the BMC does not fail, it indicates that the bus interface is available. In this case, the BMC may determine, based on information that indicates whether the bus interface is occupied and that is stored in the BMC, whether the j-th bus interface is occupied. When the j-th bus interface is occupied, the BMC may perform determining on the (j+1)-th bus interface on the BMC, that is, return to perform S502. When the j-th bus interface is not occupied, the BMC may query/configure the information in the i-th CPU through the j-th bus interface, that is, perform S504.

In some embodiments, when the BMC accesses a CUP through a bus interface, the BMC may mark the bus interface as being occupied.

S504: the BMC queries/configures information in the i-th CPU by a bus connected to the j-th bus interface on the BMC.

In this embodiment, when determining that the j-th bus interface on the BMC does not fail and is available, the BMC may interact with the i-th CPU by the bus connected to the j-th bus interface, to query/configure the information in the i-th CPU.

It should be understood that, for querying/configuring of information in another CPU in the server by the BMC, refer to the descriptions in all steps or some steps in FIG. 5. Details are not described herein again. In some embodiments, a step execution sequence of the foregoing embodiment may alternatively be determining whether the bus interface is occupied first, and then determining whether the bus interface fails.

The following uses an example in which the BMC collects a crash log (CrashLog) in a CPU for description.

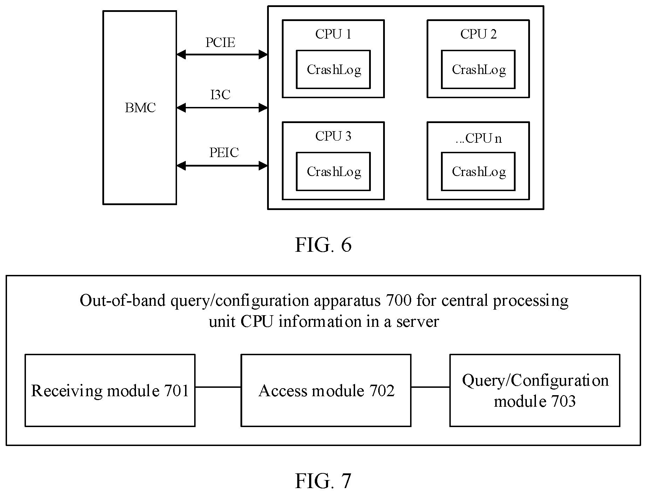

Exemplarily, as shown in FIG. 6, a BMC and n CPUs (that is, CPU 1 to CPU n) are configured in a server. The BMC is connected to each CPU by a PCIE bus, an I3C bus, and a PECI bus. After the server breaks down, the BMC needs to collect a crash log in each CPU for failure analysis and diagnosis. Therefore, quick collection of the crash log is one of important conditions for shortening downtime of the server and restoring a service of the server in time.

In this embodiment of this application, the server that includes the n CPUs breaks down due to a failure, the BMC receives an instruction for collecting the crash log, and in response to the instruction, the BMC may enable one thread for each CPU to collect a crash log in a corresponding CPU (hereinafter referred to as a CPU collection thread), where a total of n CPU collection threads are enabled for concurrent collection. The BMC may send a plurality of input/output (input/output, I/O) requests to collect a crash log in a CPU. Each I/O request may be configured to request to obtain a part of data. Taking each CPU collection thread sending an I/O request as an example, each CPU collection thread may preempt three bus interfaces. To complete a collection task as soon as possible, each CPU collection thread preferentially preempts a high-speed interface, and then preempts a secondary interface when failing to preempt the high-speed interface or when the interface fails.

A sequence of preempting the bus interfaces by the CPU collection thread may be determined based on rates of the bus interfaces, and an interface with a high rate is preferentially preempted. For example, a preemption sequence may be the PCIE bus interface -> the I3C bus interface -> the PECI bus interface. Certainly, there may alternatively be another preemption sequence. The preemption sequence may be specifically determined based on an actual situation, and is not limited herein.

A CPU collection thread that is in the BMC and that collects a crash log in the CPU 1 is used as an example. The CPU collection thread may preempt the PCIE bus interface based on a first I/O request, and the collection is completed; based on a second I/O request, the CPU collection thread may fail to preempt the PCIE bus interface but successfully preempt the I3C bus interface, and the collection is completed; the CPU collection thread may successfully preempt the PCIE bus interface based on a third I/O request, but this I/O request fails (the PCIE bus interface fails), then the I3C bus interface is successfully preempted, and the collection is completed; based on a fourth I/O request, it is determined that the PCIE bus interface fails, and the CPU collection thread fails to directly preempt the I3C bus interface, then the PECI bus interface is preempted again, and the collection is completed. Finally, all CPU collection threads successfully complete crash log collection.

In FIG. 6, when the crash logs in the n CPUs are collected, three buses are used to simultaneously collect crash logs in three CPUs, instead of using only one bus to sequentially collect the crash logs in the CPUs. Therefore, time for collecting the crash logs in the n CPUs is greatly shortened and efficiency is improved by more than 300%. In addition, the three bus interfaces may back up each other, thereby effectively increasing a success rate of collecting the crash logs.

Based on the method in the foregoing embodiment, an embodiment of this application provides an out-of-band query/configuration apparatus for central processing unit CPU information in a server. Exemplarily, FIG. 7 shows an out-of-band query/configuration apparatus for central processing unit CPU information in a server. The apparatus may be deployed in a baseboard management controller BMC in the server. A plurality of CPUs are configured in the server, and each CPU is connected to the BMC by a plurality of buses. As shown in FIG. 7, the out-of-band query/configuration apparatus 700 for central processing unit CPU information in a server includes: a receiving module 701, configured to receive an out-of-band management command, where the out-of-band management command is configured to query/configure information in the plurality of CPUs; an access module 702, configured to: in response to the out-of-band management command, access a first CPU in the plurality of CPUs by a first bus in the plurality of buses, and synchronously access a second CPU in the plurality of CPUs by a second bus in the plurality of buses; and a query/configuration module 703, configured to obtain information in the first CPU and the second CPU, or configure information in the first CPU and the second CPU.

In a possible implementation, the out-of-band management command is a query instruction configured to query the information in the plurality of CPUs or a configuration instruction configured to configure the information in the plurality of CPUs.

In a possible implementation, the out-of-band management command is a log collection instruction configured to collect crash logs (CrashLog) in the plurality of CPUs. In this case, when obtaining the information in the first CPU and the second CPU, the query/configuration module 703 is specifically configured to obtain, by the BMC, a crash log in the first CPU by the first bus, and simultaneously obtain a crash log in the second CPU by the second bus.

In a possible implementation, the out-of-band management command is the log collection instruction when the server breaks down.

In a possible implementation, the plurality of buses include three or any two of a platform environment control interface PECI bus, an improved inter-integrated circuit I3C bus, or a peripheral component interconnect express PCIE bus.

In a possible implementation, when accessing the first CPU in the plurality of CPUs by the first bus in the plurality of buses, the access module 702 is specifically configured to: send an I/O request by the first bus; and if a response message in response to the I/O request is received within a preset time, access the first CPU in the plurality of CPUs by the first bus in the plurality of buses.

In a possible implementation, when accessing the first CPU in the plurality of CPUs by the first bus in the plurality of buses, the access module 702 is specifically configured to: determine, by the BMC, that a bus interface connected to the first bus is not occupied, and access, by the BMC, the first CPU in the plurality of CPUs by the first bus in the plurality of buses.

In a possible implementation, the method further includes: on a condition that the first bus fails or the bus interface connected to the first bus is occupied, the access module 702 accesses any CPU in the plurality of CPUs by a bus other than the first bus in the plurality of buses.

It should be understood that the foregoing apparatus is configured to perform the model training method described in the foregoing embodiment. Implementation principles and technical effects of the corresponding program modules in the apparatus are similar to those described in the foregoing method. For an operation process of the apparatus, refer to a corresponding process in the foregoing method. Details are not described herein again.

Based on the method in the foregoing embodiment, an embodiment of this application provides a server, including a plurality of central processing units CPUs and a baseboard management controller BMC, where each CPU is connected to the BMC by a plurality of buses, and the BMC is configured to perform the method described in the foregoing embodiment.

Based on the method in the foregoing embodiment, an embodiment of this application provides a computer-readable storage medium. The computer-readable storage medium stores a computer program, and when the computer program runs on a processor, the processor is enabled to perform the method described in the foregoing embodiment.

It may be understood that the processor in this embodiment of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in the embodiments of this application may be implemented in a hardware manner, or may be implemented in a manner in which the processor executes software instructions. The software instructions may include corresponding software modules. The software modules may be stored in a random access memory (random access memory, RAM), a flash memory, a read-only memory (read-only memory, ROM), a programmable read-only memory (programmable rom, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. An example storage medium is coupled to the processor, so that the processor can read information from the storage medium and can write information to the storage medium. Certainly, the storage medium may alternatively be a component of the processor. The processor and the storage medium may be located in the ASIC.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions described in the embodiments of this application are completely or partially generated. The computer may be a general-purpose computer, a dedicated computer, a computer network, or another programmable apparatus. The computer instructions may be stored in the computer-readable storage medium, or transmitted by using the computer-readable storage medium. The computer instructions may be transmitted from one website, computer, server, or data center to another website, computer, server, or data center in a wired (for example, a coaxial cable, an optical fiber, a digital subscriber line (DSL)) or wireless (for example, infrared, wireless, or microwave) manner. The computer-readable storage medium may be any available medium accessible by the computer or a data storage device that includes one or more available media, for example, a server or a data center. The available medium may be a magnetic medium (for example, a floppy disk, a hard disk, or a magnetic tape), an optical medium (for example, a DVD), a semiconductor medium (for example, a solid state disk (solid state disk, SSD)), or the like.

It may be understood that various numeric numbers in the embodiments of this application are merely descriptions for convenient differentiation, and are not used to limit the scope of the embodiments of this application.

## Claims

1. An out-of-band query/configuration method for central processing unit CPU information in a server, applied to a baseboard management controller BMC in the server, wherein a plurality of CPUs are configured in the server, and each of the CPUs is connected to the BMC by a plurality of buses; and the method comprises:
receiving, by the BMC, an out-of-band management command, wherein the out-of-band management command is configured to query/configure information in the plurality of CPUs;
in response to the out-of-band management command, accessing, by the BMC, a first CPU in the plurality of CPUs by a first bus in the plurality of buses, and synchronously accessing, by the BMC, a second CPU in the plurality of CPUs by a second bus in the plurality of buses; and
obtaining, by the BMC, information in the first CPU and the second CPU, or configuring information in the first CPU and the second CPU.

2. The method according to claim 1, wherein the out-of-band management command is a query instruction configured to query the information in the plurality of CPUs or a configuration instruction configured to configure the information in the plurality of CPUs.

3. The method according to claim 1, wherein the out-of-band management command is a log collection instruction configured to collect crash logs (CrashLog) in the plurality of CPUs; and
the obtaining, by the BMC, information in the first CPU and the second CPU specifically comprises:
obtaining, by the BMC, a crash log in the first CPU by the first bus, and synchronously obtaining, by the BMC, a crash log in the second CPU by the second bus.

4. The method according to claim 3, wherein the out-of-band management command is the log collection instruction when the server breaks down.

5. The method according to any one of claims 1 to 4, wherein the plurality of buses comprise three or any two of a platform environment control interface PECI bus, an improved inter-integrated circuit I3C bus, or a peripheral component interconnect express PCIE bus.

6. The method according to any one of claims 1 to 5, wherein the accessing, by the BMC, a first CPU in the plurality of CPUs by a first bus in the plurality of buses comprises:
sending, by the BMC, an I/O request by the first bus in the plurality of buses; and
if a response message in response to the I/O request is received within a preset time, accessing, by the BMC, the first CPU in the plurality of CPUs by the first bus.

7. The method according to any one of claims 1 to 5, wherein the accessing, by the BMC, a first CPU in the plurality of CPUs by a first bus in the plurality of buses comprises:
determining, by the BMC, that a bus interface connected to the first bus in the plurality of buses is not occupied, and accessing, by the BMC, the first CPU in the plurality of CPUs by the first bus.

8. The method according to claim 6 or 7, wherein the method further comprises:
on a condition that the first bus fails or the bus interface connected to the first bus is occupied, accessing, by the BMC, any CPU in the plurality of CPUs by a bus other than the first bus in the plurality of buses.

9. A server, comprising:
a plurality of central processing units CPUs; and
a baseboard management controller BMC, wherein each of the CPUs is connected to the BMC by a plurality of buses, and the BMC is configured to perform the method according to any one of claims 1 to 8.

10. A computer-readable storage medium, wherein the computer-readable storage medium stores a computer program, and when the computer program runs on a processor, the processor is enabled to perform the method according to any one of claims 1 to 8.
